# EUROPEAN PATENT SPECIFICATION

(11) **EP 4 529 325 B1**
(45) Date of publication and mention of the grant of the patent: **04.11.2026**
(21) Application number: 23905325.9
(22) Date of filing: 08.09.2023
(51) Int. Cl.: H04W 72/0446, H04L 5/00, H04W 72/1268, H04W 72/21, H04W 72/23

(54) **PRE-SCHEDULING METHOD, ELECTRONIC DEVICE AND SYSTEM**
VERFAHREN ZUR VORPLANUNG, ELEKTRONISCHE VORRICHTUNG UND SYSTEM
PROCÉDÉ DE PRÉ-PROGRAMMATION, DISPOSITIF ÉLECTRONIQUE ET SYSTÈME

(30) Priority: 23.12.2022 CN 202211660870
(43) Date of publication of application: 26.03.2025
(73) Proprietor: Honor Device Co., Ltd., Shenzhen, Guangdong 518040 (CN)
(72) Inventor: SUN, Xiaoyu, Shenzhen, Guangdong 518040 (CN)
(74) Representative: Gill Jennings & Every LLP
(86) International application number: PCT/CN2023/117590
(87) International publication number: WO 2024/131148

(56) References cited:
- CN-A- 103 747 432
- CN-A- 105 992 373
- CN-A- 111 225 445
- CN-A- 115 002 927
- US-A1- 2017 208 619
- US-A1- 2022 053 530
- US-A1- 2022 109 551

## Description

### TECHNICAL FIELD

This application relates to the field of wireless communication, and in particular, to a pre-scheduling method, an electronic device, and a system.

### BACKGROUND

With development of wireless communication technologies, a user has an increasingly high requirement for latency of data transmission between devices. Each time a terminal performs uplink data transmission with an access network device, if there is no physical uplink shared channel (physical uplink shared channel, PUSCH) resource for the terminal to send uplink data, the terminal sends control information including an uplink scheduling request (scheduling request, SR) to the access network device through a physical uplink control channel (physical uplink control channel, PUCCH), and requests the PUSCH resource from the access network device for sending the uplink data. Apparently, this increases the latency of the uplink data and affects rate perception of the user. Therefore, in a conventional technology, to reduce the latency of the uplink data and improve the rate perception of the user, the access network device may use an uplink pre-scheduling mechanism to perform PUSCH resource scheduling. The uplink pre-scheduling mechanism does not need the terminal to perform an SR application. Instead, after being triggered by real uplink or downlink data, PUSCH resources are periodically allocated to the terminal to indicate the terminal to send the uplink data on a specified slot, thereby reducing the SR application triggered when the uplink data is sent.

However, in a current uplink pre-scheduling mechanism, if the uplink data of the terminal misses the specified slot when being sent, consequently, the uplink data is failed to be sent on the specified slot, the terminal needs to consume another non-pre-scheduled slot to send the uplink data. This cause waste of a time-domain resource.

US 2022/109551 A1 discloses a wireless communication in which a first device releases an uplink resource associated with a semi-persistent uplink transmission, indicating that the first device skips a semi-persistent uplink transmission based on releasing the uplink resource. US 2022/053530 A1 discloses a method in a user equipment (UE) configured with discontinuous reception (DRX) and a method in a network node for downlink (DL) scheduling of the UE.

### SUMMARY

This application provides a pre-scheduling method, an electronic device, and a system, to achieve an effect that a terminal reduces a situation in which uplink data misses a pre-scheduled uplink slot in a pre-scheduled periodicity, to make full use of a slot specified by pre-scheduling, and reduce waste of a time-domain resource.

According to a first aspect, this application provides a pre-scheduling method, including: a terminal receives pre-scheduled uplink grant (uplink grant, UL grant) information sent by an access network device at an interval of first duration, where the pre-scheduled UL grant information indicates a specified uplink slot for sending uplink data; the terminal stores first uplink data into a buffer of a media access control MAC layer within specified time difference from the specified uplink slot, where the specified time difference is less than or equal to a radio frame; and the terminal extracts, when a time point of the specified uplink slot is reached, the first uplink data from the buffer of the MAC layer and sends the first uplink data to the access network device. In this way, a situation in which uplink data misses a pre-scheduled uplink slot in a pre-scheduled periodicity may be reduced, to make full use of a slot specified by pre-scheduling, reduce waste of a time-domain resource, and also ensure smoothness of a service.

In a possible implementation, the specified time difference is a radio frame, half a radio frame, or N slots. The specified time difference is determined, when the specified time difference is the N slots, by time-domain resource configuration information received by the terminal from the access network device. In this way, smoothness of a service may be ensured and waste of an uplink time-domain resource is reduced.

In a possible implementation, the radio frame is 10 milliseconds, and the half radio frame is five milliseconds.

In a possible implementation, before that a terminal receives pre-scheduled uplink grant UL grant information sent by an access network device at an interval of first duration, the method further includes: the terminal sends specified signaling to the access network device, where the specified signaling includes an identifier of a specified service. In this way, a pre-scheduling process is implemented for the specified service, to ensure smoothness of a service, and also reduce waste of an uplink resource.

That the terminal stores first uplink data into a buffer of a media access control MAC layer within specified time difference from the specified uplink slot specifically includes: an application processor AP in the terminal sends the first uplink data to a baseband processor BP in the terminal within the specified time difference from the specified uplink slot; and the BP stores the first uplink data into the buffer of the MAC layer. In this way, data of the specified service may be sent based on the pre-scheduled uplink slot, to ensure smoothness of a service, and also reduce waste of an uplink resource.

In a possible implementation, before that an application processor AP in the terminal sends the first uplink data to a baseband processor BP in the terminal within the specified time difference from the specified uplink slot, the method further includes: the AP obtains, through the BP, a first uplink slot indicated by first pre-scheduled UL grant information and a periodicity of the pre-scheduled UL grant information.

In a possible implementation, the method further includes: the AP determines the specified uplink slot based on the first uplink slot and the periodicity of the pre-scheduled UL grant information.

In a possible implementation, before that the AP obtains, through the BP, a first uplink slot indicated by the first pre-scheduled UL grant information and a periodicity of the pre-scheduled UL grant information, the method further includes: the BP receives N pieces of UL grant information sent by the access network device within a specified time period or within a specified quantity of times; the BP determines M pieces of non-SR or BSR triggered UL grant information from the N pieces of UL grant information, where M is less than or equal to N; the BP determines the periodicity of the pre-scheduled UL grant information based on the M pieces of UL grant information, where the M pieces of UL grant information include the first pre-scheduled UL grant information; and the BP parses the first uplink slot from the first pre-scheduled UL grant information. In this way, the AP may efficiently determine the specified uplink slot, to improve efficiency of uplink data transmission.

In a possible implementation, before that the AP obtains, through the BP, a first uplink slot indicated by the first pre-scheduled UL grant information and a periodicity of the pre-scheduled UL grant information, the method further includes: the BP receives the periodicity of the pre-scheduled UL grant information sent by the access network device; and the BP parses the first uplink slot from the first pre-scheduled UL grant information. In this way, the AP may efficiently determine the specified uplink slot, to improve efficiency of uplink data transmission.

In a possible implementation, before that an application processor AP in the terminal sends the first uplink data to a baseband processor BP in the terminal within the specified time difference from the specified uplink slot, the method further includes: the BP receives the pre-scheduled UL grant information sent by the access network device at an interval of the first duration; and the BP sends the pre-scheduled UL grant information to the AP at an interval of the first duration.

In a possible implementation, the method further includes: the AP determines a periodicity of the pre-scheduled UL grant information based on a plurality of pieces of pre-scheduled UL grant information and the first duration when the AP receives, within a specified time period or within a specified quantity of times, the plurality of pieces of pre-scheduled UL grant information through the BP; and the AP obtains a first uplink slot from the BP, where the plurality of pieces of pre-scheduled UL grant information include first pre-scheduled UL grant information, and the first uplink slot is an uplink slot parsed by the BP from the first pre-scheduled UL grant information. In this way, the AP may efficiently determine the specified uplink slot, to improve efficiency of uplink data transmission.

In a possible implementation, the method further includes: the AP determines the specified uplink slot based on the first uplink slot and the periodicity of the pre-scheduled UL grant information.

In a possible implementation, the uplink data includes voice data and/or game data.

According to a second aspect, an embodiment of this application provides a chip or a chip system, including a memory and a processor, where the memory is configured to store a computer program, and the processor is configured to invoke and run the computer program from the memory, to enable a terminal having the chip or the chip system installed to perform the method according to any one of the possible implementations in the first aspect. In this way, a situation in which uplink data misses a pre-scheduled uplink slot in a pre-scheduled periodicity may be reduced, to make full use of a slot specified by pre-scheduling, reduce waste of a time-domain resource, and also ensure smoothness of a service.

According to a third aspect, an embodiment of this application provides a terminal, including: one or more processors, one or more memories, an application processor AP, a baseband processor BP, a radio frequency transmission path, and a SIM card. The one or more memories are coupled to the BP and the AP, the one or more memories are configured to store computer program code, where the computer program code includes computer instructions, and when the BP and the AP execute the computer instructions, the terminal is enabled to perform the method according to any one of the possible implementations in the first aspect. In this way, a situation in which uplink data misses a pre-scheduled uplink slot in a pre-scheduled periodicity may be reduced, to make full use of a slot specified by pre-scheduling, reduce waste of a time-domain resource, and also ensure smoothness of a service.

According to a fourth aspect, an embodiment of this application provides a computer-readable storage medium, including computer instructions. When the computer instructions are run on a terminal, the terminal is enabled to perform the method according to any one of the possible implementations in the first aspect. In this way, a situation in which uplink data misses a pre-scheduled uplink slot in a pre-scheduled periodicity may be reduced, to make full use of a slot specified by pre-scheduling, reduce waste of a time-domain resource, and also ensure smoothness of a service.

### BRIEF DESCRIPTION OF DRAWINGS

FIG. 1 is a diagram of an architecture of a communication system 10 according to an embodiment of this application;
FIG. 2A is a diagram of time-domain resource configuration according to an embodiment of this application;
FIG. 2B is a diagram of an uplink scheduling process according to an embodiment of this application;
FIG. 2C is a diagram of another uplink scheduling process according to an embodiment of this application;
FIG. 3A is a diagram of a specific implementation process of a pre-scheduling method according to an embodiment of this application;
FIG. 3B is a diagram of another time-domain resource configuration according to an embodiment of this application;
FIG. 4 is a diagram of a structure of a communication apparatus 1000 according to an embodiment of this application; and
FIG. 5 is a diagram of a structure of a network apparatus 2000 according to an embodiment of this application.

### DESCRIPTION OF EMBODIMENTS

Terms used in the following embodiments of this application are only intended to describe particular embodiments, and are not intended to limit this application. As used in this specification and the claims of this application, a singular expression form, "one", "a ", "said", "foregoing", "the", or "this", is intended to also include a plural expression form, unless clearly indicated to the contrary in the context. It should be further understood that the term "and/or" used in this application indicates and includes any or all possible combinations of one or more listed items. In embodiments of this application, terms "first" and "second" are used merely for the purpose of description, and shall not be construed as indicating or implying relative importance or implying a quantity of indicated technical features. Therefore, a feature defined to be "first" or "second" may explicitly or implicitly include one or more features. In the description of embodiments of this application, unless otherwise stated, "a plurality of" refers to two or more.

First, a communication system provided in an embodiment of this application is described.

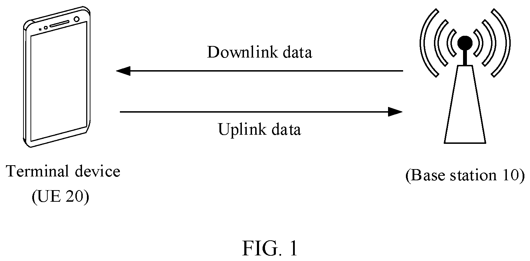

FIG. 1 is a diagram of an architecture of a communication system according to an embodiment of this application.

As shown in FIG. 1, the communication system may include one or more access network devices and one or more terminal devices connected to the access network devices. For example, FIG. 1 shows an access network device (for example, a base station 10), and a terminal device (for example, UE 20). It may be understood that FIG. 1 is only a diagram, and does not constitute a limitation to an applicable scenario of the technical solution provided in this application.

The access network device may be a transmission reception point (transmission reception point, TRP), a base station, a relay node, a node or an access point, or the like. The access network device may be an access network device in a 5G communication system or an access network device in a future evolved network. The access network device may be a base transceiver station (base transceiver station, BTS) in a global system for mobile communications (global system for mobile communications, GSM) system or a code division multiple access (code division multiple access, CDMA) network, may be a base station (NodeB, NB) in a wideband code division multiple access (wideband code division multiple access, WCDMA), may be an evolved NodeB (evolved NodeB, eNB) in long term evolution (long term evolution, LTE), or may be a gNodeB (gNodeB, gNB) in a new radio (new radio, NR). The access network device may alternatively be a radio controller in a cloud radio access network (cloud radio access network, CRAN) scenario. The technical solution provided in this application is described below by taking a base station (for example, the base station 10) as an example in this embodiment of this application.

The terminal device may be user equipment (UE), an access terminal, a UE unit, a UE station, a mobile station, a remote station, a remote terminal, a mobile device, a UE terminal, a wireless communication device, a UE agent, a UE apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved public land mobile network (public land mobile network, PLMN), or the like. The technical solution provided in this application is described below by taking user equipment UE (for example, the UE 20) as an example in this embodiment of this application.

In this embodiment of this application, the base station 10 shown in FIG. 1 may be a base station in an LTE/NR communication system. The base station 10 may include a carrier in a low frequency band, such as a carrier in a B28/n28 frequency band. The base station 10 may alternatively include a carrier in a high frequency band, such as a carrier in an n41 frequency band. The UE 20 may use the carrier in the B28/n28 frequency band, or the carrier in the n41 frequency band to perform uplink transmission with the base station 10 (in other words, the UE 20 transmits a signal to the base station 10, uplink, UL), and to perform downlink transmission with the base station 10 (in other words, the base station 10 transmits a signal to the UE 20, downlink, DL). A link used for the uplink transmission between the UE 20 and the base station 10 may be referred to as an uplink, and a link used for the downlink transmission between the UE 20 and the base station 10 may be referred to as a downlink. This is not limited herein. In some other embodiments, the UE 20 and the base station 10 may alternatively perform uplink/downlink transmission based on another carrier in a high frequency band and/or another carrier in a low frequency band. This is not limited in this application.

In this embodiment of this application, one or more subscriber identity modules (subscriber identity modules, SIMs) may be provided in the UE 20 shown in FIG. 1. In this embodiment of this application, an example in which a SIM card is provided in the UE 20 is used for description. The UE 20 may communicate with the base station 10 through the SIM card, so that the UE 20 may send data information (which may also be referred to as uplink data) to the base station 10, and receive data information (which may also be referred to as downlink data) sent by the base station 10. In some other examples, a plurality of SIM cards may alternatively be provided in the UE 20. Because the plurality of SIM cards correspond to different operators or due to other reasons, the plurality of SIM cards may be connected to different base stations, respectively. Alternatively, the plurality of SIM cards provided in the UE 20 may access a same base station. This is not limited in this embodiment of this application.

Next, an uplink pre-scheduling process provided in an embodiment of this application is described.

In the uplink pre-scheduling process, a base station 10 may pre-configure locations and quantities of uplink slots, downlink slots, and flexible slots in a time-domain resource for a SIM card in UE 20, that is, indicate that time when the UE 20 may perform uplink/downlink data transmission with the base station 10.

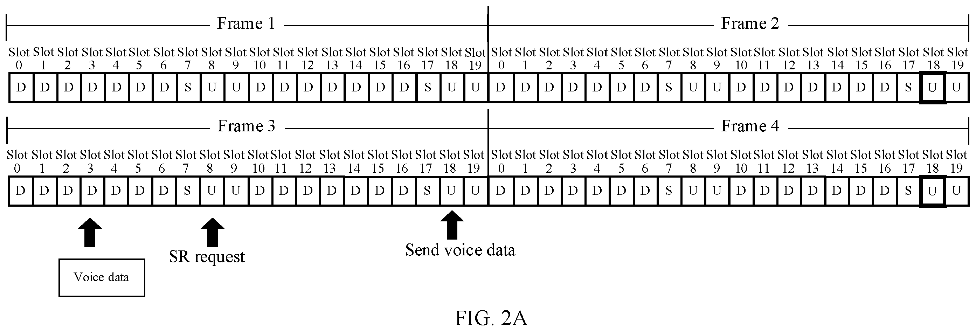

For example, FIG. 2A may show the time-domain resource pre-configured by the base station 10 for the SIM card. In an example of the time-domain resource, a periodicity may be five milliseconds (that is, half a frame), and an arrangement of each type of slots in each periodicity may be "DDDDDDDSUU". D represents a downlink slot, U represents an uplink slot, and S represents a flexible slot. All OFDM (orthogonal frequency division multiplexing, OFDM) symbols in the downlink slot are used for downlink. All OFDM symbols in the uplink slot are used for uplink. OFDM symbols in the flexible slot may be used for uplink or downlink. A sub-carrier interval of 30 KHz here is used as an example, so that one frame may be divided into 20 slots (slot), and the slots in each frame may be numbered from a Slot 0 to a Slot 19.

When the base station 10 and the UE 20 jointly perform the uplink pre-scheduling process, the base station 10 may not need the UE 20 to send an SR application to trigger the base station to send uplink grant (UL grant) information, but send pre-scheduled UL grant information to the UE 20 at an interval of specified duration (for example, 40 milliseconds or 20 milliseconds). The pre-scheduled UL grant information may indicate a PUSCH resource, when the UE 20 has uplink data to send, allocated by the base station 10 to the SIM card in the UE 20, and a specified uplink slot by the UE 20 to send the uplink data (for example, voice data or game data) by using the SIM card.

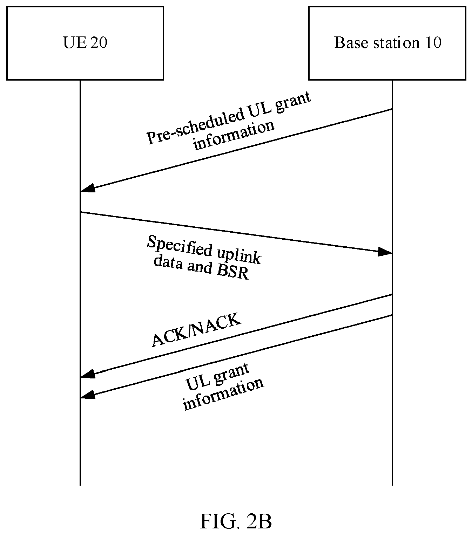

FIG. 2B shows a specific implementation of the pre-scheduling process. As shown in FIG. 2B, the base station 10 may send the pre-scheduled UL grant information to the UE 20 at an interval of specified duration (for example, 40 milliseconds or 20 milliseconds). When the UE 20 has the uplink data to send, after receiving the pre-scheduled UL grant information, the UE 20 may send the uplink data (data) and a buffer status report (buffer status report, BSR) in the specified uplink slot. The BSR may be used for indicating, how much uplink data in a buffer of a medium access control (medium access control, MAC) layer of the UE 20 needs to be sent, to the base station 10. Then, the base station 10 may send acknowledgement (acknowledgement, ACK) signaling to the UE 20 to notify the UE 20 that data information (for example, the uplink data and the BSR) sent by the base station 10 is received. Alternatively, the base station 10 may send negative acknowledgement (negative acknowledgement, NACK) signaling to the UE 20 to notify the UE 20 that data information sent by the base station 10 is not received. In addition, the base station 10 may allocate the PUSCH resource and the specified uplink slot for uplink data to be sent by the UE 20 next time based on UL grant information.

For example, as shown in FIG. 2A, the base station 10 may send the pre-scheduled UL grant information to the UE 20 at an interval of 20 ms, indicating the PUSCH resource allocated by the base station 10 to the SIM card in the UE 20 and a slot used by the UE 20 to send voice data by using the SIM card that are in a current pre-scheduled periodicity of 20 ms. For example, in the pre-scheduled periodicity of 20 ms from a frame 1 to a frame 2, the base station 10 may send pre-scheduled UL grant information 1 to the UE 20, indicating that in the pre-scheduled periodicity, the UE 20 may send the voice data to the base station 10 based on the PUSCH resource allocated by the base station 10 in a Slot 18 in the frame 2. In the pre-scheduled periodicity of 20 ms from a frame 3 to a frame 4, the base station 10 may send pre-scheduled UL grant information 2 to the UE 20, indicating that in the pre-scheduled periodicity, the UE 20 may send the voice data to the base station 10 based on the PUSCH resource allocated by the base station 10 in a Slot 18 in the frame 4.

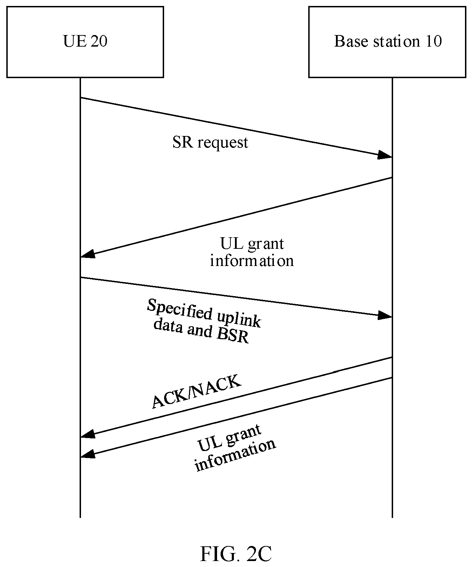

However, as shown in FIG. 2A, when the voice data needed to be sent by the UE 20 to the base station 10 reaches a baseband processor (baseband processor, BP) at a time point corresponding to a Slot 3 in the frame 3, the Slot 18 for sending the voice data in the frame 2 indicated by the pre-scheduled UL grant information 1 is missed in this case, and time from the Slot 18 for sending the voice data in the frame 4 indicated by the pre-scheduled UL grant information 2 is long. Therefore, the UE 20 may send an SR request to the base station 10 in a Slot 18 (an uplink slot) in the frame 3. After receiving the SR request, the base station 10 may send corresponding UL grant information to the UE 20, indicating that the UE 20 sends, based on the allocated PUSCH resource, the voice data in the Slot 18 (the uplink slot) in the frame 3. A specific process may be shown in FIG. 2C. A detailed description may be combined with descriptions in embodiments shown in FIG. 2A and FIG. 2B. This is not described again here.

It may be learned from the foregoing process that in the uplink pre-scheduling process, when specified data misses a slot indicated by the pre-scheduled UL grant information when being sent, the UE 20 uses a non-pre-scheduled uplink slot to send the specified data, and there is no data to be sent in the pre-scheduled uplink slot in this case, thereby causing waste of a time-domain resource.

In view of this, an embodiment of this application provides a pre-scheduling method.

In the pre-scheduling method, UE 20 receives pre-scheduled UL grant information sent by a base station 10 at an interval of specified duration (for example, 20 ms or 40 ms), where the pre-scheduled UL grant information may indicate a specified uplink slot used by the UE 20 to send, by using a SIM card, uplink data (for example, voice data or game data). The specified uplink slot may be referred to as a pre-scheduled uplink slot. The UE 20 may enable, when uplink data reaches a BP, the uplink data needed to be sent to the base station 10 to be within specified time difference from the pre-scheduled uplink slot. In this way, the UE 20 may reduce a situation in which the uplink data misses the pre-scheduled uplink slot in a pre-scheduled periodicity, to make full use of a slot specified by pre-scheduling, and reduce waste of a time-domain resource.

Next, a specific implementation process of a pre-scheduling method provided in an embodiment of this application is described.

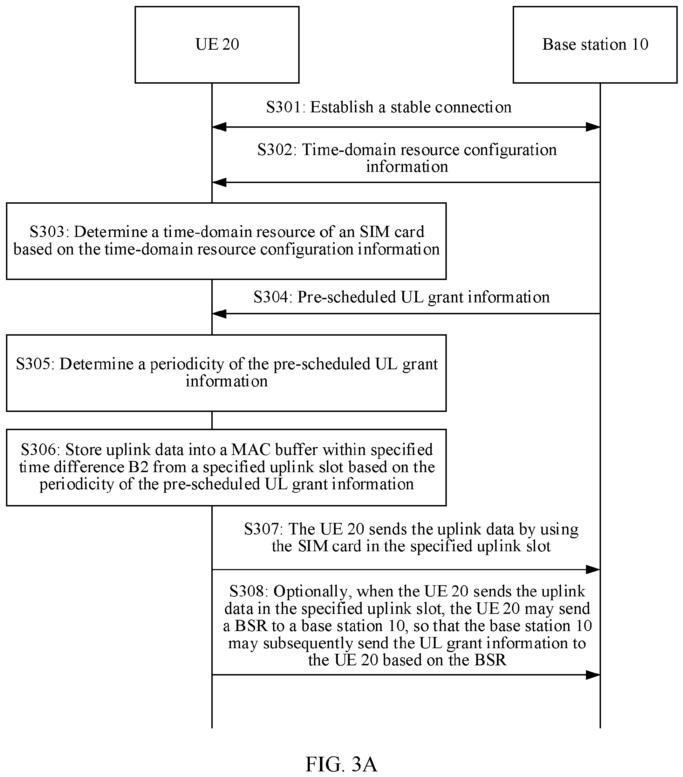

FIG. 3A is an example of a diagram of a specific implementation process of a pre-scheduling method according to an embodiment of this application. As shown in FIG. 3A, the specific implementation process of the method may include the following steps.

S301: UE 20 establishes a stable connection to a base station 10.

Specifically, the UE 20 may initiate a connection request to the base station 10 by using an initial access process and establish a stable communication connection. The UE 20 may include one or more SIM cards. In this embodiment of this application, an example in which the UE 20 includes an SIM card is used for description. That the UE 20 establishes a stable connection to a base station 10 includes: establishing a stable communication connection by using the SIM card in the UE 20, to enable the UE 20 to perform data transmission with the base station 10 by using the SIM card. For example, the UE 20 may send uplink data to the base station 10 by using the SIM card, and/or the UE 20 may receive, by using the SIM card, downlink data sent by the base station 10.

In some other embodiments, the UE 20 may alternatively include a plurality of SIM cards. That the UE 20 establishes a stable connection to a base station 10 includes: The UE 20 establishes stable communication connections by using the plurality of SIM cards, respectively, so that the UE 20 may perform data transmission with base stations corresponding to the SIM cards by using the SIM cards, respectively.

S302: The base station 10 sends time-domain resource configuration information to the UE 20.

Specifically, after the UE 20 establishes a stable connection to the base station 10, the base station 10 may send the time-domain resource configuration information to the UE 20. The time-domain resource configuration information may be used for the UE 20 to determine a time-domain resource of the SIM card, such as locations and quantities of uplink slots, downlink slots, and flexible slots. The base station 10 may send the time-domain resource configuration information to the UE 20 via cell-specific RRC signaling, UE-specific RRC signaling, UE-group SFI signaling, and UE-specific DCI signaling.

S303: The UE 20 determines the time-domain resource of the SIM card based on the time-domain resource configuration information.

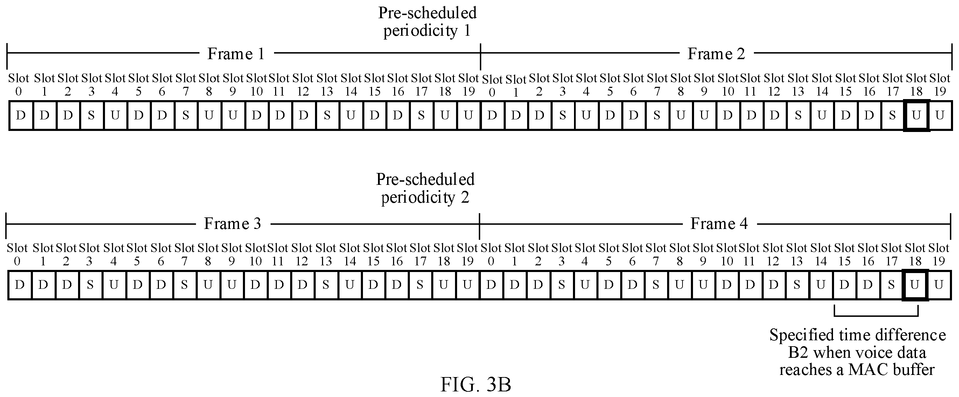

For example, FIG. 3B shows a time-domain resource of an SIM card according to an embodiment of this application. As shown in FIG. 3B, in an example of the time-domain resource of the SIM card in the UE 20, duration of a periodicity may be five ms, and an arrangement of various types of slots in a periodicity may be "DDDDDDDSUU". For descriptions of identifiers "D", "U" and "S" of the slots, refer to the foregoing descriptions and are not described again here. In the example, one frame may be divided into 20 slots (slot), and the slots in each frame may be numbered from a Slot 0 to a Slot 19. The UE 20 may perform, based on the time-domain resource shown in FIG. 3B, uplink/downlink data transmission by using the SIM card and by the base station 10.

S304: The base station 10 sends pre-scheduled UL grant information to the UE 20.

Specifically, the UE 20 may send specified signaling to the base station 10. The specified signaling includes an identifier of a specified service (for example, a game service or a voice service). When receiving the specified signaling, the base station 10 may send the pre-scheduled UL grant information to the UE 20 at interval of specified duration B1 (which may also be referred to as first duration). The pre-scheduled UL grant information indicates a specified uplink slot for sending uplink data.

S305: The UE 20 determines a periodicity of the pre-scheduled UL grant information.

In a possible implementation, when a modem of a BP in the UE 20 receives N pieces of UL grant information sent by the base station 10 within a specified time period A1 (for example, three seconds) or for a specified quantity of consecutive times A2 (for example, 10 consecutive times). The modem determines M pieces of non-SR or BSR triggered UL grant information from the N pieces of UL grant information. M is less than or equal to N. The M pieces of non-SR or BSR triggered UL grant information are UL grant information sent by the base station 10 at an interval of the specified duration B1 (for example, 20 ms, 40 ms, or 80 ms), and the M pieces of UL grant information may be marked as the pre-scheduled UL grant information. In other words, within the specified time period A1, or for the specified quantity of consecutive times A2, there is no corresponding uplink data to be sent in the uplink slot indicated by the M pieces of UL grant information, and the M pieces of UL grant information is the pre-scheduled UL grant information. The modem may determine the periodicity of the pre-scheduled UL grant information based on the M pieces of UL grant information. A value of the periodicity of the pre-scheduled UL grant information is the same as the specified duration B1. The modem may parse a specified uplink slot 1 indicated by any pre-scheduled UL grant information from the any pre-scheduled UL grant information (for example, pre-scheduled UL grant information 3, which may also be referred to as first pre-scheduled UL grant information). The modem may send information of the specified uplink slot 1, the periodicity of the pre-scheduled UL grant information, and time-domain resource configuration information of the UE 20 to an application processor (application processor, AP) in the UE 20. Alternatively, the modem may send information of the specified uplink slot 1 and the periodicity of the pre-scheduled UL grant information to an AP. In other words, the modem does not send time-domain resource configuration information of the UE 20 to the AP.

In a possible implementation, the base station 10 may determine the periodicity of the pre-scheduled UL grant information. The modem in the UE 20 may receive the periodicity of the pre-scheduled UL grant information sent by the base station 10, and may parse, from the any pre-scheduled UL grant information (for example, the pre-scheduled UL grant information 3, which may also be referred to as the first pre-scheduled UL grant information), the specified uplink slot 1 (which may also be referred to as the first uplink slot) indicated by the any pre-scheduled UL grant information. A value of the periodicity of the pre-scheduled UL grant information is the same as the specified duration B1. Then, the modem may send the information of the specified uplink slot 1, the periodicity of the pre-scheduled UL grant information, and the time-domain resource configuration information of the UE 20 to the AP in the UE 20. Alternatively, the modem may send the information of the specified uplink slot 1 and the periodicity of the pre-scheduled UL grant information to the AP. In other words, the modem does not send the time-domain resource configuration information of the UE 20 to the AP.

In a possible implementation, the modem in the UE 20 receives, at an interval of the specified duration B1, the pre-scheduled UL grant information sent by the base station 10, and sends, at an interval of the specified duration B1, the pre-scheduled UL grant information sent by the base station 10 to the AP. The modem may alternatively send the time-domain resource configuration information of the UE 20 to the AP, or the modem may not send the time-domain resource configuration information of the UE 20 to the AP. When the AP receives a plurality of pieces of pre-scheduled UL grant information by using the modem within a specified time period or within a specified quantity of times, the AP determines the periodicity of the pre-scheduled UL grant information based on the plurality of pieces of pre-scheduled UL grant information and the specified duration B1. A value of the periodicity of the pre-scheduled UL grant information is the same as the specified duration B1. In addition, the AP may receive the information of the specified uplink slot that is indicated by the any pre-scheduled UL grant information 1 and that is parsed by the modem from the any pre-scheduled UL grant information (for example, the pre-scheduled UL grant information 3). In other words, the AP obtains the first uplink slot from the modem. The plurality of pieces of pre-scheduled UL grant information include the first pre-scheduled UL grant information, and the first uplink slot is an uplink slot parsed by the modem from the first pre-scheduled UL grant information.

It may be understood that the baseband processor BP includes the modem. The pre-scheduled UL grant information does not require UE 20 to send an SR request for triggering. The pre-scheduled UL grant information may indicate that the UE 20 sends, based on a PUSCH resource allocated by the base station 10, the uplink data (for example, voice data or game data) by using the SIM card in the specified uplink slot (for example, a pre-scheduled uplink slot).

S306: The UE 20 stores the uplink data into the MAC buffer within the specified time difference B2 from the specified uplink slot based on the periodicity of the pre-scheduled UL grant information.

It should be noted that the pre-scheduled UL grant information in each pre-scheduled periodicity indicates a specified uplink slot for sending uplink data in the pre-scheduled periodicity. The specified uplink slot of the pre-scheduled periodicity has a fixed frame number and a fixed slot location. For example, the specified uplink slot of the pre-scheduled periodicity is a Slot 18 of a second frame in the pre-scheduled periodicity, or a Slot 18 of a first frame in the pre-scheduled periodicity. This is not limited in this application. It should be noted that the pre-scheduled periodicity here is a specified time period including the specified uplink slot and a time point at which the pre-scheduled UL grant information is received, and the specified time period is the same as the periodicity of the pre-scheduled UL grant information.

After obtaining the periodicity of the pre-scheduled UL grant information and the information of the specified uplink slot 1, or obtaining the periodicity of the pre-scheduled UL grant information, the time-domain resource configuration information of the UE 20, and the information of the specified uplink slot 1, the AP may determine specified uplink slots in one or more pre-scheduled periodicities. Time difference between the specified uplink slots in two neighboring pre-scheduled periodicities is the periodicity of the pre-scheduled UL grant information. Time difference between the specified uplink slots in all pre-scheduled periodicities is N times (where N may be a positive integer, such as 1, 2, 3, 4, or 5) of the periodicity of the pre-scheduled UL grant information. The AP may send the uplink data to the BP, and the BP stores the uplink data into the MAC buffer, so that a time point 2 when the uplink data reaches the buffer of the media medium access control (media medium access control, MAC) layer is within the specified time difference B2 (for example, eight slots or four slots) from a time point 1 corresponding to the specified uplink slot. In other words, within the specified time difference from the specified uplink slot, the application processor AP in the UE 20 sends first uplink data to the baseband processor BP in the UE 20, and the BP stores the first uplink data into the buffer of the MAC layer. The uplink data and the first uplink data may be data with a high latency requirement, such as voice data or game data.

It should be noted that the specified time difference is less than or equal to a radio frame. The specified time difference may be a radio frame, half a radio frame, or N slots (Slot). The radio frame may be 10 milliseconds, and the half radio frame may be five milliseconds. Duration of a radio frame is not limited to 10 milliseconds, and may alternatively be another value. The specified time difference B2 is determined, when the specified time difference B2 is N slots, by the time-domain resource configuration information of the UE 20, and the N slots may not include the uplink slot or one uplink slot, or a plurality of included uplink slots may be adjacent. In addition, the N slots are less than 10 milliseconds.

In this case, when the specified time difference B2 is 10 milliseconds or five milliseconds, smoothness of a service may be ensured. When the specified time difference B2 is N slots, and the N slots do not include the uplink slot or one uplink slot, or a plurality of included uplink slots are adjacent, the UE 20 does not send an SR to enable the base station 10 to schedule the uplink slot other than the specified uplink slot. Alternatively, the UE 20 sends an SR to enable an uplink slot scheduled by the base station 10 to coincide with the specified uplink slot, thereby ensuring smoothness of a service and reducing waste of an uplink slot resource.

It may be understood that the uplink data stored into the buffer of the MAC layer may also be referred to as the first uplink data.

For example, a time-domain resource of the SIM card shown in FIG. 3B is used as an example. As shown in FIG. 3B, a frame 1 and a frame 2 form a pre-scheduled periodicity 1, and a frame 3 and a frame 4 form a pre-scheduled periodicity 2. Duration of the pre-scheduled periodicity 1 and the pre-scheduled periodicity 2 is both 20 ms. The periodicity of the pre-scheduled UL grant information obtained by the AP is 20 ms, and the obtained specified uplink slot 1 is a Slot 18 in the frame 2 in the pre-scheduled periodicity 1. The AP may calculate specified uplink slots in pre-scheduled periodicities based on the specified uplink slot 1 and the periodicity of the pre-scheduled UL grant information. Time difference between the specified uplink slots in two neighboring pre-scheduled periodicities is the periodicity of the pre-scheduled UL grant information. For example, the AP may calculate that the specified uplink slot in the pre-scheduled periodicity 2 is a Slot 18 in the frame 4. Time difference between the Slot 18 in the frame 2 and the Slot 18 in the frame 4 is 20 ms. The AP may send the voice data (that is, the foregoing uplink data) to the BP, and the BP stores the voice data into the buffer of the MAC layer (which may also be referred to as a MAC buffer), so that a time point 2 when the voice data reaches the buffer of the MAC layer is within four slots (that is, the specified time difference B2) from a time point 1 corresponding to the Slot 18 in the frame 4. In other words, the time point 2 when the voice data reaches the buffer of the MAC layer is a Slot 15 in the frame 4.

S307: The UE 20 sends the uplink data by using the SIM card in the specified uplink slot.

Specifically, the UE 20 may extract, when a time point of the specified uplink slot is reached, the first uplink data from the buffer of the MAC layer and send the first uplink data to the base station 10.

For example, the embodiment shown in FIG. 3B is used for an example, the UE 20 may extract the voice data from the buffer of the MAC layer when reaching the Slot 18 in the frame 4 (that is, the specified uplink slot indicated by the pre-scheduled UL grant information), and send the voice data (that is, the uplink data) by using the SIM card.

S308: Optionally, when the UE 20 sends the uplink data in the specified uplink slot, the UE 20 may send a BSR to the base station 10, so that the base station 10 may subsequently send the UL grant information to the UE 20 based on the BSR.

It may be understood that the foregoing steps performed by the modem in the BP may alternatively be performed by another module in the BP. This is not limited in this application.

Next, a possible product form of the UE 20 provided in an embodiment of this application is described.

It should be understood that any product form having a function of the UE 20 falls within the protection scope of embodiments of this application. It should also be understood that the following description is only an example, and the product form of the UE 20 in embodiments of this application is not limited.

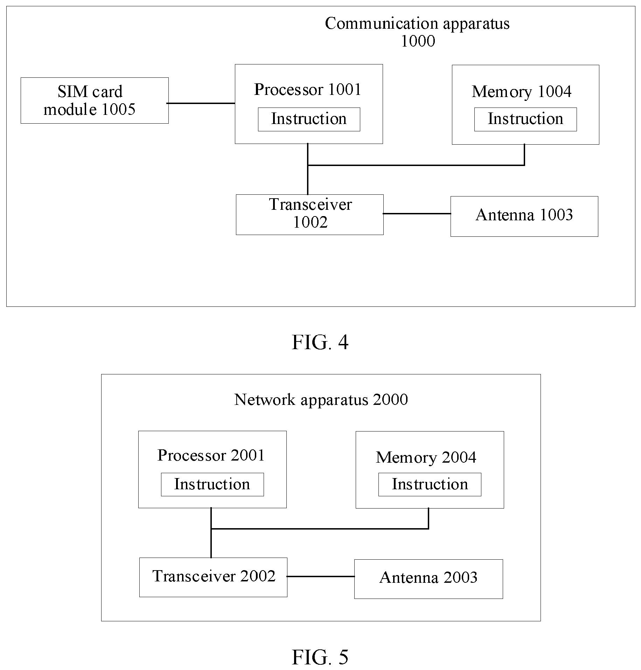

As a possible product form, the UE 20 in this embodiment of this application may be implemented by using a general bus architecture. FIG. 4 is a diagram of a structure of a communication apparatus 1000 according to an embodiment of this application. The communication apparatus 1000 may be UE 20 or an apparatus in the UE 20.

As shown in FIG. 4, the communication apparatus 1000 includes a processor 1001, a transceiver 1002 internally connected to the processor for communication, an antenna 1003, a memory 1004, and a SIM card module 1005.

The processor 1001 is a general-purpose processor, a dedicated purpose processor, or the like. For example, the processor 1001 may be a baseband processor or a central processing unit. The baseband processor may be configured to process a communication protocol and communication data. The central processing unit may be configured to control the communication apparatus (for example, a base station, a baseband chip, a terminal, a terminal chip, a DU, or a CU), perform a computer program, and process data of a computer program.

In this embodiment of this application, the processor 1001 may include a modem module and an AP module. The modem module may perform one or more functions of providing a basic communication function for the UE 20 and determining a periodicity of pre-scheduled UL grant information. The AP module may be configured to perform one or more functions of determining the periodicity of the pre-scheduled UL grant information, and controlling time for uplink data to reach a buffer of a MAC layer based on the periodicity of the pre-scheduled UL grant information sent by the modem module.

The transceiver 1002 may be referred to as a transceiver unit, a transceiver machine, a transceiver circuit, or the like, and is configured to implement a transceiver function. The transceiver 1002 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

The communication apparatus 1000 may further include the antenna 1003 and/or a radio frequency unit (not shown in the figure). The antenna 1003 and/or the radio frequency unit may be in the communication apparatus 1000 or may be separated from the communication apparatus 1000. In other words, the antenna 1003 and/or the radio frequency unit may be deployed remotely or in a distributed manner. The antenna 1003 may be configured to transmit and receive an electromagnetic wave signal.

The communication apparatus 1000 may include one or more memories 1004. The memories 1004 may store instructions. The instructions may be computer programs. The computer programs may be run on the communication apparatus 1000, so that the communication apparatus 1000 performs the method in the foregoing method embodiments. Optionally, the memory 1004 may further store data. The communication apparatus 1000 and the memory 1004 may be disposed separately, or may be integrated.

The processor 1001, the transceiver 1002, and the memory 1004 may be connected via a communication bus.

In this embodiment of this application, the instructions for implementing the time-domain resource configuration method and performing, based on the pre-scheduling method, signal receiving and sending may be stored in the memory 1004 and the processor 1001.

In this embodiment of this application, the communication apparatus 1000 may receive, by using the transceiver 1002, the antenna 1003, and/or the radio frequency unit, the pre-scheduled UL grant information sent by the base station 10. Then, the communication apparatus 1000 may send, based on a specified uplink slot indicated by the pre-scheduled UL grant information, uplink data by using the transceiver 1002, the antenna 1003, and/or the radio frequency unit. Specifically, the transceiver 1002, the antenna 1003, and/or the radio frequency unit may send, within the specified uplink slot indicated by the pre-scheduled UL grant information, an uplink signal of the uplink data to the base station 10 by using a UL carrier.

In this embodiment of this application, the UE 20 may perform uplink/downlink data transmission by using the SIM card module 1005 and an access network device (for example, the base station 10) to achieve a function such as a call and data communication.

A scope of the communication apparatus in this application is not limited thereto, and a structure of the communication apparatus may not be limited to FIG. 4. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may also include a storage component configured to store data and a computer program;
(3) an ASIC, such as a modem (modem);
(4) a module that can be embedded in another device;
(5) a receiver, a terminal, a smart terminal, a cellular phone, a wireless device, a handheld device, a mobile unit, a vehicle-mounted device, a network device, a cloud device, an artificial intelligence device, or the like; or
(6) another.

Next, a network apparatus 2000 enabling an access network device (for example, the base station 10) to implement the uplink time-domain resource management method provided in this application is described.

The network apparatus 2000 shown in FIG. 5 may be the access network device (for example, the base station 10) in this embodiment of this application, a component in the access network device for implementing the foregoing method, or a chip used in the access network device. The chip may be such as a system-on-a-chip (system-on-a-chip, SOC) or a baseband chip having a communication function.

As shown in FIG. 5, the network apparatus 2000 includes a processor 2001 and a transceiver 2002 internally connected to the processor for communication. Optionally, the network apparatus 2000 may further include an antenna 2003 and/or a radio frequency unit (not shown in the figure). Optionally, the network apparatus 2000 may include one or more memories 2004. The memories 2004 may store instructions. The instructions may be computer programs. The computer programs may be run on the network apparatus 2000, so that the network apparatus 2000 performs the method in the foregoing method embodiments.

In this embodiment of this application, the instructions for implementing the time-domain resource configuration method and performing, based on the pre-scheduling method, signal receiving and receiving may be stored in the memory 2004 and the processor 2001.

In this embodiment of this application, the network apparatus 2000 may send time-domain resource configuration information to UE 20 by using the transceiver 2002, the antenna 2003, and/or the radio frequency unit. The network apparatus 2000 may send pre-scheduled UL grant information provided in this embodiment of this application to the UE 20 by using the transceiver 2002, the antenna 2003, and/or the radio frequency unit. Then, the network apparatus 2000 may perform signal receiving and/or signal sending based on a time-domain resource type indicated by the time-domain resource configuration information and/or a time-domain resource indicated by the pre-scheduled UL grant information.

The processor in this embodiment of this application may include, but is not limited to, at least one of the following: various types of computing devices that run software, such as a central processing unit (central processing unit, CPU), a microprocessor, a digital signal processor (DSP), a microcontroller unit (microcontroller unit, MCU), or an artificial intelligence processor. Each computing device may include one or more cores for executing software instructions to perform an operation or processing. The processor may be a separate semiconductor chip or integrated into a semiconductor chip with another circuit. For example, the processor may form a SoC (system-on-a-chip) with another circuit (such as an encoding and decoding circuit, a hardware acceleration circuit, or various buses and interface circuits), or may be integrated into an ASIC as a built-in processor of the ASIC. The ASIC with an integrated processor may be packaged separately or packaged with another circuit. In addition to the core for executing a software instruction to perform an operation or processing, the processor may further include a necessary hardware accelerator, such as a field programmable gate array (field programmable gate array, FPGA), a programmable logic device (programmable logic device, PLD), or a logic circuit for implementing a dedicated logic operation.

The memory in this embodiment of this application may include at least one of the following types: a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only memory, EEPROM). In some scenarios, the memory may be a compact disc read-only memory (compact disc read-only memory, CD ROM) or another compact disc storage, an optical disc storage (including a compressed optical disc, a laser disc, an optical disc, a digital versatile optical disc, a Blu-ray disc, or the like), a magnetic disk storage medium or another magnetic storage device, or any another medium that can be configured to carry or store expected program code in the form of an instruction or a data structure and that can be accessed by a computer, but is not limited thereto.

As used in the foregoing embodiments, based on the context, the term "when" may be interpreted as a meaning of "if", "after", "in response to determining... ", or "in response to detecting...". Similarly, based on the context, the phrase "if it is determined" or "if a (described condition or event) is detected" may be interpreted as a meaning of "when it is determined... ", "in response to determining... ", "when the (described condition or event) is detected", or "in response to detecting the (described condition or event)".

All or some of the foregoing embodiments may be implemented by using software, hardware, firmware, or any combination thereof. When software is used to implement embodiments, all or some of embodiments may be implemented in the form of a computer program product. The computer program product includes one or more computer instructions. When the computer program instructions are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a soft disk, a hard disk, or a magnetic tape), an optical medium (for example, a DVD), a semiconductor medium (for example, a solid-state drive), or the like.

A person of ordinary skill in the art may understand that all or some of the procedures in the method in embodiments may be implemented by using a computer program instructing relevant hardware. The program may be stored in a computer-readable storage medium. When the program is executed, the procedures in the foregoing method embodiments may be performed. The foregoing storage medium includes any medium that can store program code, such as a ROM, a random access memory RAM, a magnetic disk, or an optical disc.

## Claims

1. A pre-scheduling method, comprising:
receiving (S304), by a terminal, pre-scheduled uplink grant, UL grant, information sent by an access network device at intervals of a first duration, wherein the pre-scheduled UL grant information indicates a specified uplink slot for sending uplink data;
storing (S306), by the terminal, first uplink data into a buffer of a media access control MAC layer such that a time point when the first uplink data reaches the buffer of the media access control MAC layer is within a specified time difference from a time point corresponding to the specified uplink slot, wherein the specified time difference is less than or equal to a radio frame; and
extracting, by the terminal when a time point of the specified uplink slot is reached, the first uplink data from the buffer of the MAC layer, and sending (S307) the first uplink data to the access network device;
wherein the storing, by the terminal, first uplink data into a buffer of a media access control MAC layer within specified time difference from the specified uplink slot specifically comprises:
sending, by an application processor AP in the terminal, the first uplink data to a baseband processor BP in the terminal within the specified time difference from the specified uplink slot; and
storing, by the BP, the first uplink data into the buffer of the MAC layer.

2. The method according to claim 1, wherein the specified time difference is a radio frame, half a radio frame, or N slots, and the specified time difference is determined, when the specified time difference is the N slots, by time-domain resource configuration information received by the terminal from the access network device.

3. The method according to claim 2, wherein the radio frame is 10 milliseconds, and the half radio frame is five milliseconds.

4. The method according to claim 1, wherein before the receiving, by a terminal, pre-scheduled uplink grant UL grant information sent by an access network device at an interval of first duration, the method further comprises:
sending, by the terminal, specified signaling to the access network device, wherein the specified signaling comprises an identifier of a specified service.

5. The method according to claim 1, wherein before the sending, by an application processor AP in the terminal, the first uplink data to a baseband processor BP in the terminal within the specified time difference from the specified uplink slot, the method further comprises:
obtaining (S305), by the AP through the BP, a first uplink slot indicated by first pre-scheduled UL grant information and a periodicity of the pre-scheduled UL grant information.

6. The method according to claim 5, wherein the method further comprises:
determining, by the AP, the specified uplink slot based on the first uplink slot and the periodicity of the pre-scheduled UL grant information.

7. The method according to claim 6, wherein before the obtaining, by the AP through the BP, a first uplink slot indicated by first pre-scheduled UL grant information and a periodicity of the pre-scheduled UL grant information, the method further comprises:
receiving, by the BP, N pieces of UL grant information sent by the access network device within a specified time period or within a specified quantity of times;
determining, by the BP, M pieces of non-SR or BSR-triggered UL grant information from the N pieces of UL grant information, wherein M is less than or equal to N;
determining, by the BP, the periodicity of the pre-scheduled UL grant information based on the M pieces of UL grant information, wherein the M pieces of UL grant information comprise the first pre-scheduled UL grant information; and
parsing, by the BP, the first uplink slot from the first pre-scheduled UL grant information.

8. The method according to claim 6, wherein before the obtaining, by the AP through the BP, a first uplink slot indicated by first pre-scheduled UL grant information and a periodicity of the pre-scheduled UL grant information, the method further comprises:
receiving, by the BP, the periodicity of the pre-scheduled UL grant information sent by the access network device; and
parsing, by the BP, the first uplink slot from the first pre-scheduled UL grant information.

9. The method according to claim 1, wherein before the sending, by an application processor AP in the terminal, the first uplink data to a baseband processor BP in the terminal within the specified time difference from the specified uplink slot, the method further comprises:
receiving, by the BP, the pre-scheduled UL grant information sent by the access network device at an interval of the first duration; and
sending, by the BP, the pre-scheduled UL grant information to the AP at an interval of the first duration.

10. The method according to claim 9, wherein the method further comprises:
determining, by the AP, a periodicity of the pre-scheduled UL grant information based on a plurality of pieces of pre-scheduled UL grant information and the first duration when the AP receives, within a specified time period or within a specified quantity of times, the plurality of pieces of pre-scheduled UL grant information through the BP; and
obtaining, by the AP, a first uplink slot from the BP, wherein the plurality of pieces of pre-scheduled UL grant information comprise first pre-scheduled UL grant information, and the first uplink slot is an uplink slot parsed by the BP from the first pre-scheduled UL grant information.

11. The method according to claim 10, wherein the method further comprises:
determining, by the AP, the specified uplink slot based on the first uplink slot and the periodicity of the pre-scheduled UL grant information.

12. The method according to claim 1, wherein the uplink data comprises voice data and/or game data.

13. A chip or a chip system, comprising a memory and a processor, wherein the memory is configured to store a computer program, and the processor is configured to invoke and run the computer program from the memory, to enable a terminal having the chip or the chip system installed to perform the method according to any one of claims 1 to 12.

14. A terminal, comprising: one or more processors, one or more memories, an application processor AP, a baseband processor BP, a radio frequency transmission path, and a SIM card, wherein the one or more memories are coupled to the BP and the AP, and the one or more memories are configured to store computer program code, wherein the computer program code comprises computer instructions, and when the BP and the AP execute the computer instructions, the terminal is enabled to perform the method according to any of claims 1 to 12.

## Patentansprüche

1. Ein Vorplanungsverfahren, umfassend:
Empfangen (S304) durch ein Endgerät von vorab geplanten Uplink-Gewährungsinformationen (UL-Grant-Informationen), die von einer Zugangsnetzvorrichtung in Abständen einer ersten Dauer gesendet werden, wobei die vorab geplanten UL-Grant-Informationen einen spezifizierten Uplink-Zeitschlitz zum Senden von Uplink-Daten angeben;
Speichern (S306) durch das Endgerät von ersten Uplink-Daten in einem Puffer einer Medienzugriffssteuerungsschicht (MAC-Schicht), sodass ein Zeitpunkt, zu dem die ersten Uplink-Daten den Puffer der Medienzugriffssteuerungsschicht (MAC-Schicht) erreichen, innerhalb einer spezifizierten Zeitdifferenz zu einem Zeitpunkt liegt, der dem spezifizierten Uplink-Zeitschlitz entspricht, wobei die spezifizierte Zeitdifferenz kleiner oder gleich einem Funkrahmen ist; und
Extrahieren durch das Endgerät, wenn ein Zeitpunkt des spezifizierten Uplink-Zeitschlitzes erreicht ist, der ersten Uplink-Daten aus dem Puffer der MAC-Schicht und Senden (S307) der ersten Uplink-Daten an die Zugangsnetzvorrichtung;
wobei das Speichern der ersten Uplink-Daten durch das Endgerät in einem Puffer einer Medienzugriffssteuerungsschicht (MAC-Schicht) innerhalb einer spezifizierten Zeitdifferenz zu dem spezifizierten Uplink-Zeitschlitz insbesondere umfasst:
Senden der ersten Uplink-Daten durch einen Anwendungsprozessor (AP) im Endgerät an einen Basisbandprozessor (BP) im Endgerät innerhalb der spezifizierten Zeitdifferenz zu dem spezifizierten Uplink-Zeitschlitz; und
Speichern der ersten Uplink-Daten durch den BP in den Puffer der MAC-Schicht.

2. Verfahren nach Anspruch 1, wobei die spezifizierte Zeitdifferenz ein Funkrahmen, ein halber Funkrahmen oder N Zeitschlitze ist und die spezifizierte Zeitdifferenz, wenn die spezifizierte Zeitdifferenz N Zeitschlitzen entspricht, durch Zeitbereichs-Ressourcenkonfigurationsinformationen bestimmt wird, die das Endgerät von der Zugangsnetzvorrichtung empfängt.

3. Verfahren nach Anspruch 2, wobei der Funkrahmen 10 Millisekunden und der halbe Funkrahmen fünf Millisekunden beträgt.

4. Verfahren nach Anspruch 1, wobei das Verfahren vor dem Empfangen durch ein Endgerät von vorab geplanten Uplink-Gewährungsinformationen (UL-Grant-Informationen), die von einer Zugangsnetzvorrichtung in Abständen einer ersten Dauer gesendet werden, weiterhin umfasst:
Senden einer spezifizierten Signalisierung durch das Endgerät an die Zugangsnetzvorrichtung, wobei die spezifizierte Signalisierung einen Identifikator eines spezifizierten Dienstes umfasst.

5. Verfahren nach Anspruch 1, wobei das Verfahren vor dem Senden der ersten Uplink-Daten durch einen Anwendungsprozessor (AP) im Endgerät an einen Basisbandprozessor (BP) im Endgerät innerhalb der spezifizierten Zeitdifferenz zu dem spezifizierten Uplink-Zeitschlitz weiterhin umfasst:
Erlangen (S305), durch den AP über den BP, eines ersten Uplink-Zeitschlitzes, der durch erste vorab geplante UL-Gewährungsinformationen angezeigt wird, und einer Periodizität der vorab geplanten UL-Gewährungsinformationen.

6. Verfahren nach Anspruch 5, wobei das Verfahren ferner umfasst:
Bestimmen, durch den AP, des spezifizierten Uplink-Zeitschlitzes basierend auf dem ersten Uplink-Zeitschlitz und der Periodizität der vorab geplanten UL-Gewährungsinformationen.

7. Verfahren nach Anspruch 6, wobei vor dem Erlangen, durch den AP über den BP, eines ersten Uplink-Zeitschlitzes, der durch erste vorab geplante UL-Gewährungsinformationen angezeigt wird, und einer Periodizität der vorab geplanten UL-Gewährungsinformationen, das Verfahren ferner umfasst:
Empfangen, durch den BP, von N Stücken von UL-Gewährungsinformationen, die von der Zugangsnetzwerkvorrichtung innerhalb eines spezifizierten Zeitraums oder innerhalb einer spezifizierten Anzahl von Malen gesendet wurden;
Bestimmen, durch den BP, von M Stücken von nicht-SR- oder BSR-ausgelösten UL-Gewährungsinformationen aus den N Stücken von UL-Gewährungsinformationen, wobei M kleiner oder gleich N ist;
Bestimmen, durch den BP, der Periodizität der vorab geplanten UL-Gewährungsinformationen basierend auf den M St ü cken von UL-Gewährungsinformationen, wobei die M Stücke von UL-Gewährungsinformationen die ersten vorab geplanten UL-Gewährungsinformationen umfassen; und
Analysieren, durch den BP, des ersten Uplink-Zeitschlitzes aus den ersten vorab geplanten UL-Gewährungsinformationen.

8. Verfahren nach Anspruch 6, wobei vor dem Erlangen, durch den AP über den BP, eines ersten Uplink-Zeitschlitzes, der durch erste vorab geplante UL-Gewährungsinformationen angezeigt wird, und einer Periodizität der vorab geplanten UL-Gewährungsinformationen, das Verfahren ferner umfasst:
Empfangen, durch den BP, der Periodizität der vorab geplanten UL-Gewährungsinformationen, die von der Zugangsnetzwerkvorrichtung gesendet wurden; und
Analysieren, durch den BP, des ersten Uplink-Zeitschlitzes aus den ersten vorab geplanten UL-Gewährungsinformationen.

9. Verfahren nach Anspruch 1, wobei vor dem Senden, durch einen Anwendungsprozessor AP im Endgerät, der ersten Uplink-Daten an einen Basisbandprozessor BP im Endgerät innerhalb der spezifizierten Zeitdifferenz zu dem spezifizierten Uplink-Zeitschlitz, das Verfahren ferner umfasst:
Empfangen, durch den BP, der vorab geplanten UL-Gewährungsinformationen, die von der Zugangsnetzwerkvorrichtung in Abständen der ersten Dauer gesendet wurden; und
Senden, durch den BP, der vorab geplanten UL-Gewährungsinformationen an den AP in Abständen der ersten Dauer.

10. Verfahren nach Anspruch 9, wobei das Verfahren ferner umfasst:
Bestimmen, durch den AP, einer Periodizität der vorab geplanten UL-Gewährungsinformationen basierend auf einer Mehrzahl von vorab geplanten UL-Gewährungsinformationen und der ersten Dauer, wenn der AP innerhalb eines spezifizierten Zeitraums oder innerhalb einer spezifizierten Anzahl von Malen die Mehrzahl von vorab geplanten UL-Gewährungsinformationen über den BP empfängt; und
Erlangen, durch den AP, eines ersten Uplink-Zeitschlitzes vom BP, wobei die Mehrzahl von vorab geplanten UL-Gewährungsinformationen erste vorab geplante UL-Gewährungsinformationen umfasst, und der erste Uplink-Zeitschlitz ein Uplink-Zeitschlitz ist, der vom BP aus den ersten vorab geplanten UL-Gewährungsinformationen analysiert wurde.

11. Verfahren nach Anspruch 10, wobei das Verfahren ferner umfasst:
Bestimmen, durch den AP, des spezifizierten Uplink-Zeitschlitzes basierend auf dem ersten Uplink-Zeitschlitz und der Periodizität der vorab geplanten UL-Gewährungsinformationen.

12. Verfahren nach Anspruch 1, wobei die Uplink-Daten Sprachdaten und/oder Spieldaten umfassen.

13. Chip oder Chipsystem, umfassend einen Speicher und einen Prozessor, wobei der Speicher konfiguriert ist, ein Computerprogramm zu speichern, und der Prozessor konfiguriert ist, das Computerprogramm aus dem Speicher aufzurufen und auszuführen, um es einem Endgerät, in dem der Chip oder das Chipsystem installiert ist, zu ermöglichen, das Verfahren nach einem der Ansprüche 1 bis 12 durchzuführen.

14. Endgerät, umfassend: einen oder mehrere Prozessoren, einen oder mehrere Speicher, einen Anwendungsprozessor AP, einen Basisbandprozessor BP, einen Hochfrequenz-Übertragungspfad und eine SIM-Karte, wobei der eine oder die mehreren Speicher mit dem BP und dem AP gekoppelt sind und der eine oder die mehreren Speicher konfiguriert sind, Computerprogrammcode zu speichern, wobei der Computerprogrammcode Computeranweisungen umfasst, und wenn der BP und der AP die Computeranweisungen ausführen, das Endgerät befähigt wird, das Verfahren nach einem der Ansprüche 1 bis 12 durchzuführen.

## Revendications

1. Procédé de pré-ordonnancement, comprenant :
la réception (S304), par un terminal, d'informations d'octroi de liaison montante (UL grant) pré-ordonnancées envoyées par un dispositif de réseau d'accès à des intervalles d'une première durée, dans lequel les informations d'octroi de liaison montante (UL grant) pré-ordonnancées indiquent un créneau temporel de liaison montante spécifié pour l'envoi de données de liaison montante ;
le stockage (S306), par le terminal, de premières données de liaison montante dans une mémoire tampon d'une couche de contrôle d'accès au support (MAC) de telle sorte qu'un point temporel auquel les premières données de liaison montante atteignent la m émoire tampon de la couche de contrôle d'accès au support (MAC) se situe dans une différence temporelle spécifiée par rapport à un point temporel correspondant au cré neau temporel de liaison montante spécifié, dans lequel la différence temporelle spé cifiée est inférieure ou égale à une trame radioélectrique ; et
l'extraction, par le terminal lorsqu'un point temporel du créneau temporel de liaison montante spécifié est atteint, des premières données de liaison montante à partir de la mémoire tampon de la couche MAC, et l'envoi (S307) des premières donn ées de liaison montante au dispositif de réseau d'accès ;
dans lequel le stockage, par le terminal, des premières données de liaison montante dans une mémoire tampon d'une couche de contrôle d'accès au support (MAC) à l'int érieur d'une différence temporelle spécifiée par rapport au créneau temporel de liaison montante spécifié comprend spécifiquement :
l'envoi, par un processeur d'application (AP) dans le terminal, des premières donn ées de liaison montante à un processeur de bande de base (BP) dans le terminal à l'intérieur de la différence temporelle spécifiée par rapport au créneau temporel de liaison montante spécifié ; et
le stockage, par le BP, des premières données de liaison montante dans la mémoire tampon de la couche MAC.

2. Procédé selon la revendication 1, dans lequel la différence temporelle spécifié e est une trame radioélectrique, une demi-trame radioélectrique, ou N créneaux temporels, et la différence temporelle spécifiée est déterminée, lorsque la différence temporelle spécifiée est égale aux N créneaux temporels, par des informations de configuration de ressources dans le domaine temporel reçues par le terminal en provenance du dispositif de réseau d'accès.

3. Procédé selon la revendication 2, dans lequel la trame radioélectrique est de 10 millisecondes, et la demi-trame radioélectrique est de cinq millisecondes.

4. Procédé selon la revendication 1, dans lequel avant la réception, par un terminal, des informations d'octroi de liaison montante (UL grant) pré-ordonnancées envoyées par un dispositif de réseau d'accès à un intervalle d'une première durée, le procédé comprend en outre :
l'envoi, par le terminal, d'une signalisation spécifiée au dispositif de réseau d'acc ès, dans lequel la signalisation spécifiée comprend un identifiant d'un service spécifié.

5. Procédé selon la revendication 1, dans lequel avant l'envoi, par un processeur d'application (AP) dans le terminal, des premières données de liaison montante à un processeur de bande de base (BP) dans le terminal à l'intérieur de la différence temporelle spécifiée par rapport au créneau temporel de liaison montante spécifié, le procédé comprend en outre :
l'obtention (S305), par l'AP via le BP, d'un premier créneau temporel de liaison montante indiqué par des premières informations d'octroi de liaison montante pré-ordonnancées et d'une périodicité des informations d'octroi de liaison montante pré-ordonnancées.

6. Procédé selon la revendication 5, dans lequel le procédé comprend en outre :
la détermination, par l'AP, du créneau temporel de liaison montante spécifié sur la base du premier créneau temporel de liaison montante et de la périodicité des informations d'octroi de liaison montante pré-ordonnancées.

7. Procédé selon la revendication 6, dans lequel, avant l'obtention, par l'AP via le BP, d'un premier créneau temporel de liaison montante indiqué par des premières informations d'octroi de liaison montante pré-ordonnancées et d'une périodicité des informations d'octroi de liaison montante pré-ordonnancées, le procédé comprend en outre :
la réception, par le BP, de N éléments d'informations d'octroi de liaison montante envoyés par le dispositif de réseau d'accès dans une période de temps spécifiée ou dans une quantité de fois spécifiée ;
la détermination, par le BP, de M éléments d'informations d'octroi de liaison montante non déclenchées par SR ou BSR parmi les N éléments d'informations d'octroi de liaison montante, où M est inférieur ou égal à N ;
la détermination, par le BP, de la périodicité des informations d'octroi de liaison montante pré-ordonnancées sur la base des M éléments d'informations d'octroi de liaison montante, où les M éléments d'informations d'octroi de liaison montante comprennent les premières informations d'octroi de liaison montante pré-ordonnancé es ; et
l'analyse, par le BP, du premier créneau temporel de liaison montante à partir des premières informations d'octroi de liaison montante pré-ordonnancées.

8. Procédé selon la revendication 6, dans lequel, avant l'obtention, par l'AP via le BP, d'un premier créneau temporel de liaison montante indiqué par des premières informations d'octroi de liaison montante pré-ordonnancées et d'une périodicité des informations d'octroi de liaison montante pré-ordonnancées, le procédé comprend en outre :
la réception, par le BP, de la périodicité des informations d'octroi de liaison montante pré-ordonnancées envoyées par le dispositif de réseau d'accès ; et
l'analyse, par le BP, du premier créneau temporel de liaison montante à partir des premières informations d'octroi de liaison montante pré-ordonnancées.

9. Procédé selon la revendication 1, dans lequel, avant l'envoi, par un processeur d'application AP dans le terminal, des premières données de liaison montante à un processeur de bande de base BP dans le terminal dans la différence de temps spécifiée par rapport au créneau de liaison montante spécifié, le procédé comprend en outre :
la réception, par le BP, des informations d'octroi de liaison montante pré-ordonnancées envoyées par le dispositif de réseau d'accès à un intervalle de la premi ère durée ; et
l'envoi, par le BP, des informations d'octroi de liaison montante pré-ordonnancées à l'AP à un intervalle de la première durée.

10. Procédé selon la revendication 9, dans lequel le procédé comprend en outre :
la détermination, par l'AP, d'une périodicité des informations d'octroi de liaison montante pré-ordonnancées sur la base d'une pluralité d'informations d'octroi de liaison montante pré-ordonnancées et de la première durée lorsque l'AP reçoit, dans une période de temps spécifiée ou dans un nombre spécifié de fois, la pluralité d'informations d'octroi de liaison montante pré-ordonnancées via le BP ; et
l'obtention, par l'AP, d'un premier créneau temporel de liaison montante à partir du BP, dans lequel la pluralité d'informations d'octroi de liaison montante pré-ordonnancées comprend des premières informations d'octroi de liaison montante pré-ordonnancées, et le premier créneau temporel de liaison montante est un créneau temporel de liaison montante analysé par le BP à partir des premières informations d'octroi de liaison montante pré-ordonnancées.

11. Procédé selon la revendication 10, dans lequel le procédé comprend en outre :
la détermination, par l'AP, du créneau temporel de liaison montante spécifié sur la base du premier créneau temporel de liaison montante et de la périodicité des informations d'octroi de liaison montante pré-ordonnancées.

12. Procédé selon la revendication 1, dans lequel les données de liaison montante comprennent des données vocales et/ou des données de jeu.

13. Puce ou système de puce, comprenant une mémoire et un processeur, dans lequel la mémoire est configurée pour stocker un programme informatique, et le processeur est configuré pour appeler et exécuter le programme informatique à partir de la mémoire, afin de permettre à un terminal ayant la puce ou le système de puce installé d'exécuter le procédé selon l'une quelconque des revendications 1 à 12.

14. Terminal, comprenant : un ou plusieurs processeurs, une ou plusieurs mé moires, un processeur d'application AP, un processeur de bande de base BP, un chemin de transmission radiofréquence, et une carte SIM, dans lequel les une ou plusieurs mé moires sont couplées au BP et à l'AP, et les une ou plusieurs mémoires sont configur é es pour stocker un code de programme informatique, dans lequel le code de programme informatique comprend des instructions informatiques, et lorsque le BP et l'AP exécutent les instructions informatiques, le terminal est amené à exécuter le proc édé selon l'une quelconque des revendications 1 à 12.
